Europäisches Patentamt

European Patent Office

Office européen des brevets

(19)

(11) **EP 0 532 613 B1**

(12) **EUROPEAN PATENT SPECIFICATION**

(45) Date of publication and mention
of the grant of the patent:
**17.04.1996 Bulletin 1996/16**

(51) Int Cl.6: **C01G 45/12**, C01G 49/00,
C01G 53/00, C01G 45/00,
A23B 7/148, C01G 1/00

(21) Application number: **91911026.2**

(22) Date of filing: **07.06.1991**

(86) International application number:
**PCT/AU91/00246**

(87) International publication number:
**WO 91/18835 (12.12.1991 Gazette 1991/28)**

(54) **ETHYLENE SORBING SUBSTANCES**

SORPTIONSMITTEL FÜR ETHYLEN

SUBSTANCES DE SORPTION DE L'ETHYLENE

(84) Designated Contracting States:
**AT BE CH DE DK ES FR GB GR IT LI LU NL SE**

(30) Priority: **08.06.1990 AU 572/90**

(43) Date of publication of application:
**24.03.1993 Bulletin 1993/12**

(73) Proprietor: **COMMONWEALTH SCIENTIFIC AND INDUSTRIAL RESEARCH ORGANISATION**
Campbell,
**Australian Capital Territory 2601 (AU)**

(72) Inventors:
- **TURNEY, Terence, William**
  **Mount Waverley, Victoria 3149 (AU)**
- **CHRISTIE, Gregor Bruce Yeo**
  **Middle Park, Victoria 3206 (AU)**
- **HARDIN, Simon, Gerard**
  **North Fitzroy, VIC 3068 (AU)**
- **CORRIGAN, Penelope, Anne**
  **Springvale South, VIC 3172 (AU)**

(74) Representative: **Perry, Robert Edward**
**GILL JENNINGS & EVERY**
**Broadgate House**
**7 Eldon Street**
**London EC2M 7LH (GB)**

(56) References cited:
**EP-A- 0 094 983        EP-A- 0 255 461**
**EP-A- 0 369 275        US-A- 4 448 760**
**US-A- 4 450 148        US-A- 4 520 005**

- **DATABASE WPIL Derwent Publications Ltd., London, GB; AN 85-187995 & JP-A-60118175 (SHIRAISHI)**
- **CHEMICAL ABSTRACTS, Volume 96, No. 10, issued 8 March 1982, S. RUBEN, "Alkaline Primary Cell with cathode of Potassium permanganate with lithium hydroxide", page 519, column 1, Abstract No. 76507y.**
- **CHEMICAL ABSTRACTS, Volume 100, No. 22, issued 28 May 1984, YAMAMOTO et al., "Studies on the formation of some oxides of maganese in the MN7+-Mn2+-OH system with hydrothermal method", page 640, column 1, Abstract No. 184798d.**
- **CHEMICAL ABSTRACTS, Volume 112, No. 8, issued 30 April 1990, DOUGLAS et al., "Analysis of potassium permanganata (KMn04)/sodium hydroxide battery header cleaning procedure", page 230, column 1, Abstract No. 162172r.**

## Description

The present invention relates to new layered-double hydroxide materials and their use in a method for the removal of ethylene.

Ethylene is an important determinant of the storage life of produce including fruits, vegetables and flowers. The removal of ethylene from storage atmospheres with chemical scrubbers has been investigated for more than forty years. For example, potassium permanganate is a useful reagent for removing ethylene, which has been used successfully both in apple storage rooms and as an intransit package insert for bananas. Although the reaction between ethylene and permanganate has long been used both as a qualitative test for alkenes and as a quantitative method for ethylene assay, ethylene is only removed slowly by dilute permanganate solutions. To overcome this difficulty, it has been suggested in the prior art to coat inert materials of large surface area with permanganate, dried, and used to remove ethylene. Materials which have been used as carriers for permanganate include Celite®, Perlite®, vermiculite, silica gel, rice-hull ash and alumina preparations.

Such permanganate coated materials have been partially successful. However, their success has been limited by the low loading of permanganate ion in such coats. Moreover, the permanganate ion may leach out if the materials become wet. This is a particular problem in the storage and transfer of produce, since these are often accompanied by an atmosphere of high humidity.

Accordingly it is an object of the present invention to overcome, or at least alleviate, one or more of the difficulties related to the prior art.

Accordingly, in a first aspect of the present invention, there is provided a synthetic layered-double permanganate material including

a synthetic layered-double hydroxide material modified such that permanganate anion is included to a level greater than approximately 20% of the theoretical anion exchange capacity of the hydroxide material within its interstices.

Desirably, the permanganate anion is present in the material to a level of approximately 30% of, or greater than, the theoretical anion exchange capacity of the hydroxide material.

The synthetic layered-double permanganate material so formed may be a synthetic hydrotalcite-type compound. The synthetic layered-double permanganate material may function as an oxidising agent. The synthetic layered-double permanganate material may function to remove organic compounds including ethylene where required. The synthetic layered-double permanganate material may exhibit high permanganate ion loading relative to the prior art, and reduced sensitivity to water leaching.

The synthetic layered-double permanganate material may be represented by the idealised general formula

$$M_m N_n (OH)_{2m+2n} (MnO_4)_{n-(a+2b+3c)} A_a B_b C_c . x H_2 O$$

wherein

M is divalent metal cation;
N is a trivalent metal cation;
A is a monovalent anion;
B is a divalent anion;
C is a trivalent anion;
m and n are numbers such that m/n has values of approximately 1 to approximately 6;
a, b, c and x are each numbers of from 0 to approximately 10.

Preferably M is a divalent metal cation selected from calcium, magnesium, nickel, iron and zinc, or mixtures thereof.
Preferably N is a trivalent metal cation selected from aluminium, iron, chromium or mixtures thereof.
Preferably A is a hydroxide ion.
Alternatively, or in addition, A and C may be selected from hydrophobic anions as discussed below.
Preferably synthetic layered-double permanganate material has the idealised general formula

$$[Mg_{1-y}Al_y(OH)_2][(OH)_a(CO_3)_b(MnO_4)_{(y-a-2b)}] . x H_2 O$$

wherein

$$0.20 \leq y \leq 0.5$$

and

$$0.2 \leq (y-a-2b)/y \leq 1.0$$

The synthetic layered-double permanganate material may be selected from the following hydrotalcite like minerals

$$Mg_2 Al_2 (OH)_8 (MnO_4)_2 . 4 H_2 O$$

$$Mg_3Al_2(OH)_{10}(MnO_4)_2.4H_2O$$

$$Mg_4Al_2(OH)_{12}(MnO_4)_2.4H_2O$$

$$Mg_5Al_2(OH)_{14}(MnO_4)_2.4H_2O$$

$$Mg_6Al_2(OH)_{16}(MnO_4)_2.4H_2O$$

$$Mg_7Al_2(OH)_{18}(MnO_4)_2.4H_2O$$

$$Mg_8Al_2(OH)_{20}(MnO_4)_2.4H_2O$$

$$Mg_6Al_2(OH)_{16}[(CO_3)_{0.2}(MnO_4)_{1.6}].4H_2O$$

$$Mg_6Al_2(OH)_{16}[(CO_3)_{0.8}(MnO_4)_{0.4}].4H_2O$$

$$Mg_6Al_2(OH)_{16}[(OH)_{1.7}(MnO_4)_{0.3}.]4H_2O$$

$$Mg_6Al_2(OH)_{16}[(OH)_{0.3}(MnO_4)_{1.7}].4H_2O$$

$$Mg_6Al_2(OH)_{16}[(CO_3)_{0.3}(OH)_{0.5}(MnO_4)_{0.9}].4H_2O$$

$$Mg_6Fe_2(OH)_{16}(MnO_4)_2.4H_2O$$

$$Mg_6Cr_2(OH)_{16}(MnO_4)_2.4H_2O$$

$$Ni_6Al_2(OH)_{16}(MnO_4)_2.4H_2O$$

$$Ca_6Al_2(OH)_{16}(MnO_4)_2.4H_2O$$

$$Zn_6Al_2(OH)_{16}(MnO_4)_2.4H_2O$$

$$Zn_6Al_2(OH)_{16}(MnO_4)_2.4H_2O$$

$$LiAl_2(OH)_6(MnO_4).5H_2O$$

preferably

$$Mg_6Al_2(OH)_{16}(MnO_4)_2.4H_2O$$

In a preferred aspect of the present invention, the synthetic layered-double permanganate material may be modified to render it partially or substantially completely hydrophobic. The synthetic layered-double permanganate material may be modified in any suitable manner. The synthetic layered-double permanganate material may be coated with a hydrophobic material.

Accordingly in a preferred aspect of the present invention, the synthetic layered-double permanganate material is further modified to include a hydrophobic anion within its interstices. The hydrophobic anion may be derived from a long chain alkyl acid material. Long chain alkyl carboxylic acids, sulphonic acids, phosphoric or phosphonic acids may be used. A hydrophobic anion derived from a long chain alkyl carboxylic acid is preferred.

The synthetic layered-double permanganate material may be modified to include a hydrophobic anion or anions within its interstices at the same time or subsequent to the inclusion of the permanganate ion within its interstices.

The synthetic layered-double permanganate material may be utilised in the extension of storage life of produce as discussed below. For that purpose, the material may be provided in any suitable form. The material may be provided in a pelletised form. The material may be provided in the form of a sachet or in the form of a blanket. In the blanket form, the material may be designed to overlay the produce or produce packaging.

Accordingly, in a further aspect of the present invention there is provided an ethylene sorbing pellet composition including

an effective amount of a synthetic layered-double permanganate material modified to include permanganate anions within its interstices; and

a pelleting support.

The pelleting support may function to aid formation and provide improved stability to the pellets so formed. The synthetic layered-double permanganate material may be of the type described above. The permanganate material is preferably

$$Mg_6Al_2(OH)_6(MnO_4^-)_2.4H_2O.$$

The permanganate material may be present in amounts of from approximately 70% to 95% by weight based on the total weight of the pellet composition.

The pelleting support may be of any suitable type. An organic or inorganic filler may be used. Alumina, silica or paraffins have been found to be suitable.

The amount of pelleting support is preferably kept to a minimum so that ethylene sorbing ability is not significantly diminished. The pelleting support may be present in amounts of from approximately 5% to 30% by weight based on the total weight of the pellet composition.

Accordingly in a further embodiment of the present invention there is provided an ethylene sorbing pellet composition including approximately 70 to 95% by weight based on the total weight of the pellet composition of a synthetic double-layered permanangate material in which M is a divalent cation selected from calcium magnesium, nickel, iron and zinc, and N is a trivalent metal cation selected from aluminium, iron and chromium; and

approximately 5 to 30% by weight based on the total weight of the pelleting composition of a pelleting support selected from alumina, silica and paraffins.

In a still further aspect of the present invention there is provided a method of preparing a synthetic layered-double permanganate material, which method includes

providing

a synthetic layered-double hydroxide material; and
a source of permanganate anions; and

mixing the synthetic layered-double hydroxide material and permanganate anions for a time sufficient to allow reaction therebetween.

The synthetic layered-double hydroxide material may be a hydrotalcite-like mineral. The hydrotalcite-like mineral may be derived from compounds having the general formula

$$M_mN_n(OH)_{2m+2n}A_a.bH_2O$$

wherein

M is a divalent metal cation;
N is a trivalent metal cation;
A is an hydroxyl ion or a mono-, di- or trivalent anion which decomposes to form hydroxyl ions;
m and n are integers such that m/n has values of approximately 1 to approximately 6;
a is an integer with the provisos that when A is a monovalent anion a = n, when A is a divalent anion a = 1/2n, and when A is a trivalent anion a = 1/3m; and
b is an integer having values of 0 to 10.

Preferably the hydrotalcite-like material is hydrotalcite having the formula

$$Mg_6Al_2(OH)_{16}(CO_3^{2-}).4H_2O$$

In this case preferably at least approximately 20%, more preferably approximately 50%, most preferably approximately 100% of the carbonate ion present is replaced by permanganate ion.

The source of permanganate ions may be potassium permanganate. The source of permanganate ions may be provided in the form of a solution. An aqueous solution may be used.

The hydrotalcite-like material and aqueous solution of permanganate ions may be mixed and allowed to react for a period up to approximately 10 days, preferably approximately 1 hour to 3 days. The reaction may be conducted at elevated temperatures in order to speed up processing. Treatment of the hydrotalcite-like material may be repeated several times, with fresh batches of permanganate each time.

The method of preparing the synthetic layered-double permanganate material may further include the preliminary step of heating the hydrotalcite-like material for a time sufficient and at a temperature sufficient to reduce or eliminate water of hydration and decompose any interlayer anions, such as carbonate ions.

The material may be heated to a temperature of approximately 300 to 900°C. In a preferred form the sample is initially heated in air at a temperature of approximately 300 to 400°C for a period of approximately one to five hours. A final heat treatment is then conducted for a period of 1 to 2 hours at a temperature of approximately 400 to 600°C.

The method of preparing the synthetic layered-double permanganate material may further include the subsequent step of

isolating the reaction product; and
drying the reaction product.

The isolation step may include subjecting the extrusion solution to a centrifugation process. The drying step may include oven drying the product of centrifugation at a temperature of approximately 100°C for approximately 2 to 3 hours.

In a preferred form, the reaction product may be formed into pellets. The pelleting step may be conducted in any suitable manner. Preferably the reaction product may be subjected to an extrusion step and dried to form pellets.

The strength of pellets so formed is improved.

As discussed above, the synthetic layered-double permanganate material prepared as described above may be utilized as an oxidation agent and in particular in the removal of organic compounds.

Accordingly, in a preferred aspect of the present invention there is provided a method for the extension of storage life of produce, which method includes

providing
produce in a suitable storage container; and
a synthetic layered-double permanganate material including a synthetic layered-double hydroxide material modified to include permanganate anion within its interstices; and placing the synthetic layered-double material

within, or in communication with, the suitable storage container.

As discussed above, the synthetic double-layered permanganate material may be a material having the general formula

$$M_m N_n (OH)_{2m+2n} (MnO_4)_{n-(a+2b+3c)} A_a B_b C_c \cdot xH_2O$$

wherein M, N, m, n and b are as described above.

Preferably, the synthetic layered-double hydroxide has the formula

$$Mg_6 Al_2 (OH)_{16} (MnO_4^-)_2 \cdot 4H_2O$$

More preferably, the synthetic layered-double permanganate material may be a synthetic layered-double hydrophobic material, as discussed above. In a particularly preferred form, the synthetic layered-double hydrophobic material may be formed from the synthetic layered-double material described above, further modified by inclusion of hydrophobic anions derived from a long-chain alkyl carboxylic acid or alkyl sulphonic acid.

In a preferred form the synthetic double-layered material may be provided in a pelletised form. The material may be provided in the form of a sachet or in the form of a blanket. In the blanket form the material may be designed to overlay the produce or produce packaging.

Alternatively, or in addition, where the storage container is provided with a controlled atmosphere e.g. in a refrigerated container, the material may simply be in communication with the controlled atmosphere. The material may be contained in a cartridge or the like, with the atmosphere drawn over it by any suitable means. A pump or the like may be used.

The present invention will now be more fully described with reference to the accompanying examples. It should be understood, however, that the description following is illustrative only and should not be taken in any way as a restriction on the generality of the invention described above.

## EXAMPLE 1

### Precursor Preparation

A mixture of $Mg(NO_3)_2 \cdot 6H_2O$ (2308g) and $Al(NO_3)_3 \cdot 9H_2O$ (1125g), dissolved in $H_2O$ (5l), were added with vigorous stirring to NaOH (1080g) and $Na_2CO_3$ (954g), dissolved in $H_2O$ (5l). The resultant white slurry was diluted with a further 5l of water and the mixture was stirred and heated to 100°C for 18 hours. After cooling, the white product was separated by centrifugation, washed eight times with water (6l) and re-centrifuged each time, until the washings exhibited a conductivity of <2 milliSiemens per metre. The wet gel was dried on trays in an oven at 100°C for 16h, ground to -40 mesh and stored in sealed containers.

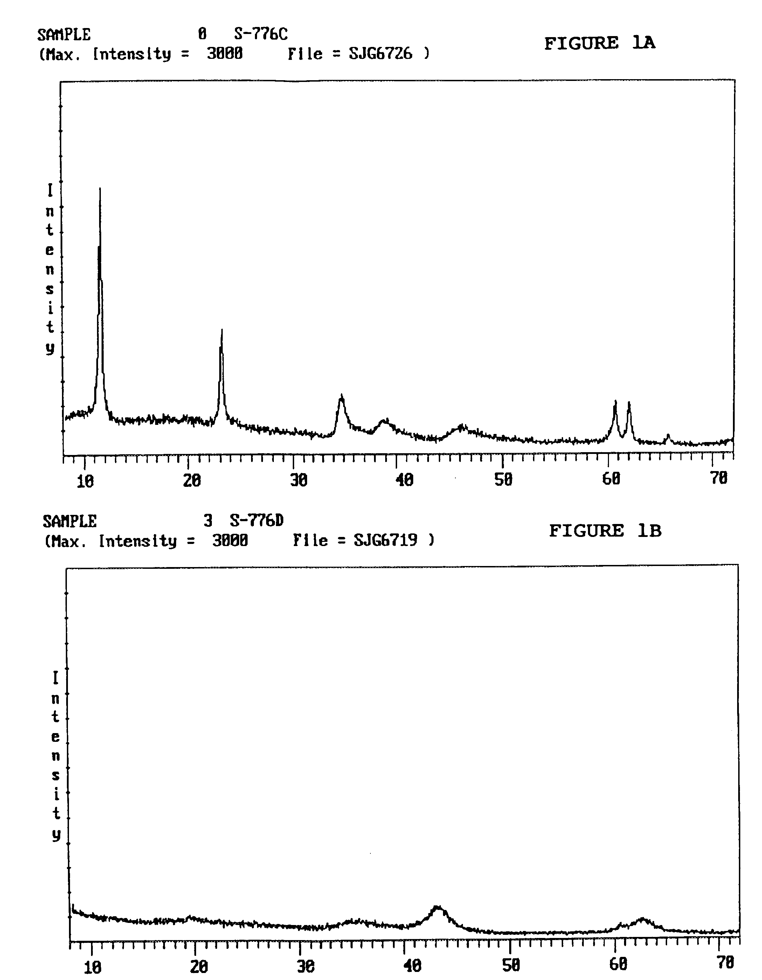

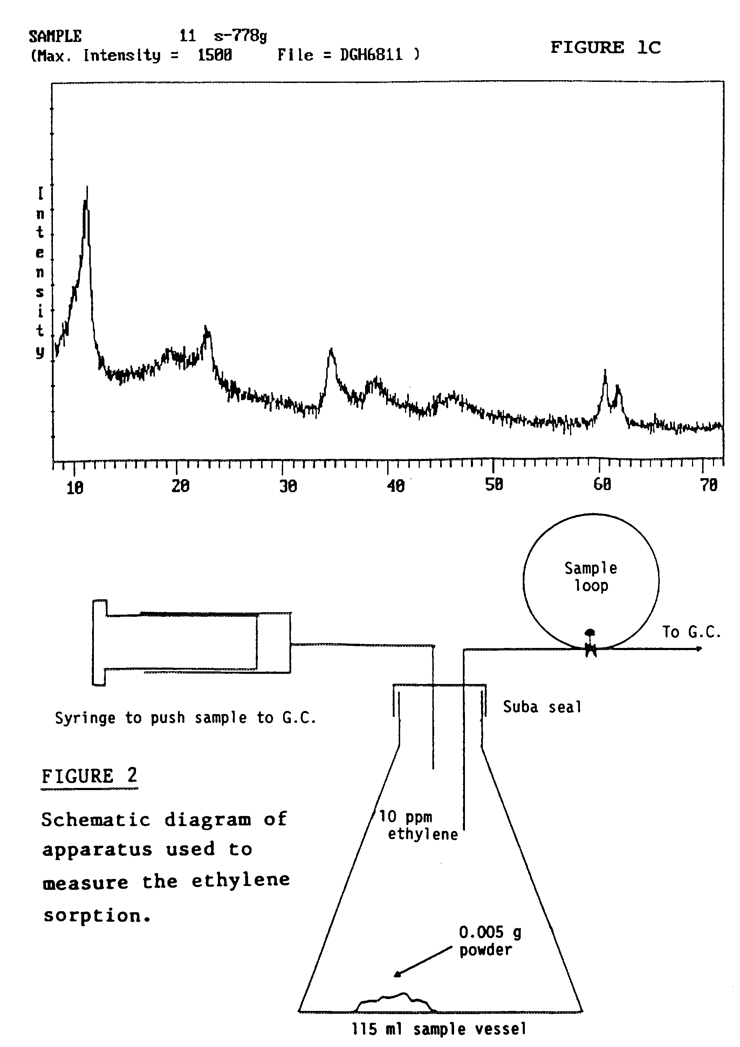

The powder XRD of the sample (Figure 1a) exhibited a pronounced basal spacing at 7.74 Angstrom, indicative of a layered-double hydroxide.

Additive Preparation

A sample of the above material (300g) was heated in air at 450-500°C for three hours, resulting in a weight loss to 195g. Its XRD as shown in Figure 1b is very broad and showed no basal spacing. 195g of the heated sample was stirred with a solution of $KMnO_4$ (400g) in water (4 litre) for 4 days, centrifuged down and washed with water (6 x 41 ml). After drying in an oven at 50°C for 18h, the purple powder was passed through a #100 mesh sieve. The XRD pattern of the resultant powder is shown in Figure 1(c). The elemental analysis showed the Mg, Al and Mn content to be 22.4%, 7.8% and 4.5% (wt/wt) respectively. This indicates the $MnO_4$- incorporated into the structure was 28% of the theoretical exchange capacity. The quantity of $C_2H_4$ reacted by the samples was 6.2 ml (STP) per 1 gram.

Washing

0.5g of the potassium permanganate (5%) loaded adsorbent samples were dispersed in 10 ml of distilled water and stirred for 30 seconds. The mixture was filtered through a porous glass frit and the powder remaining on the frit was washed with a further 30 ml of distilled water. The washed powder was then tested for its capacity to adsorb ethylene.

The ethylene uptake after washing provides a comparative measure of the combined effects of leaching removing the active permanganate component and water saturation hampering the access of ethylene to the high area surface of the adsorbent.

The effects of moisture on the performance and leaching of the adsorbents is important because of the high humidity prevalent during the storage of produce.

Ethylene Sorption Testing

The apparatus used to measure the ethylene adsorption of the various scavengers is schematically shown in Figure 2. The results obtained are used as a relative measure of the scavenger ability of the materials. A 115 ml conical glass beaker is loaded with either 0.005 g of powder and then sealed with an unused suba seal. Air containing ethylene (1150 ppm) is injected through the suba seal to give a total concentration of 10 ppm in the beaker. The beaker is allowed to stand at constant temperature for seventeen hours before the ethylene concentration of the gas in the beaker is determined using a gas chromatograph. 3 ml of air is injected into the beaker which pushes 3 ml of the sample gas through a 1 ml sample loop on the gas chromatograph.

The reproducibility of the technique was determined by dosing nine empty conical flasks with ethylene and determining the ethylene concentration in four of the beakers within one hour of dosing. The other five flasks were left to stand for five days and the ethylene concentration was determined. The areas under the gas chromatograph peaks for the four flasks were 13296, 13749, 13105 and 13525 area units. The peak areas of the five flasks left to stand were 13342, 13734, 13425, 13039 and 13228 area units. This demonstrated that no leakage occured from the flasks and that the dosing and gas chromatograph techniques used give reproducible results.

The ethylene scavenging capacity of the various materials are quoted throughout the report as x %. This is the change in the area of the gas chromatograph peak over the seventeen hour period. Before each adsorption run at least one flask free of scavenger was tested as a blank to ensure the reproducibility of the results. The results are shown in Table 1.

TABLE 1

| | adsorbent | adsorbent + $KMnO_4$ | adsorbent + $KMnO_4$ + washing |
|---|---|---|---|
| Permanganate crystals | - | 20.7% | - |
| Hydrotalcite | 0% | 83.3% | 12.9% |
| Hydrotalcite calcined and loaded with permanganate ions | 0% | 100% | 100% |
| ZSM5 high silica | 0% | 97.5% | 11.4% |
| Silica gel | 0% | 88.0% | 2.2.% |
| Magnesium oxide | 0% | 100% | 25.3% |
| X zeolite Ca exchanged | 0% | 62.6% | 0% |

Continuation of the Table on the next page

TABLE 1   (continued)

| | adsorbent | adsorbent + KMnO$_4$ | adsorbent + KMnO$_4$ + washing |
|---|---|---|---|
| X zeolite Na exchanged | - | - | 9.6% |
| Y zeolite H exchanged | - | - | 6.4% |
| Mordenite H exchanged | - | - | 1.4% |
| Mordenite Na exchanged | - | - | 0.7% |

EXAMPLE 2

A hydrotalcite containing permanganate was prepared using the same method as Example 1 except that the ageing period used for the hydrotalcite formation was 1 week instead of 18 hours. The quantity of $C_2H_4$ reacted by the sample was 7.8 ml (STP) per 1 gram. Elemental analysis showed the Mg, Al and Mn to be 20.5%, 7.5%, 6.3% (wt/wt) respectively. This represents 41% of the theoretical exchange capacity of a hydrotalcite with this Mg/Al ratio.

EXAMPLE 3

A hydrotalcite containing permanganate was prepared using the same method as in Example 2 except that 900 ml of 40 wt% $NaMnO_4$ was contacted with 43 g of calcined hydrotalcite and 34 g of 70% $HClO_4$ solution was added dropwise over 0.5 hours, instead of the $KMnO_4$ solution. The quantity of $C_2H_4$ reacted by the sample was 5.95 ml (STP) per 1 gram. The elemental analysis showed the Mg, Al and Mn to be 16.9%, 6.1%, 4.88% (wt/wt) respectively. This represents 39.4% of the theoretical exchange capacity of a hydrotalcite with this Mg/Al ratio.

EXAMPLE 4

Hydrotalcite containing permanganate was prepared with a Mg/Al ratio of 2:1. The method of Example 1 was used with the quantities changed to

| | |
|---|---|
| Magnesium nitrate hexahydrate | 137 g |
| Aluminum nitrate monohydrate | 100 g |
| (both in 60 ml of water) | |
| Sodium hydroxide | 75 g |
| Sodium carbonate | 42 g |
| (both in 100 ml of water) | |

and the ageing period reduced to 18 hours. The hydrotalcite was dried at 50°C for 18 hours, then heated to 500°C for 2 hours. All the heating was carried out in air. The calcined hydrotalcite (10g) was added to a 10% (wt/wt) solution of $KMnO_4$ (100g) in water (11). The mixture was sealed and stirred at room temperature for 3 days. The solid was separated from the solution by centrifugation and then washed by dispersing in 11 of distilled water and recentrifuging followed by decantation. This washing was repeated five times. The sample was dried at 80°C overnight. The XRD analysis of this material showed a basal spacing of 8.6 and 7.9 Angstroms. Elemental analysis showed the Mg, Al and Mn to be 17.8%, 7.67% and 7.02% (wt/wt) respectively. This represents 45% of the theoretical exchange capacity of a hydrotalcite structure with this Mg/Al ratio (2:1). The quantity of $C_2H_4$ reacted by the material was 7.6 ml (STP) per 1 gram. The quantity of $MnO_4$ leached from the sample when 1 gram was stirred with 100 ml of distilled water for 10 min was 5.5 mg/g.

EXAMPLE 5

A material containing permanganate was prepared with a Mg:Al ratio of 3:2. The method of Example 4 was used with the quantities changed to

| | |
|---|---|
| Magnesium nitrate hexahydrate | 77 g |
| Aluminum nitrate monohydrate | 75 g |
| (both in 70 ml of water) | |

| **Sodium hydroxide** | *48* g |
|---|---|
| **Sodium carbonate** | *32* g |

**(both in 110 ml of water).**

The material was calcined, contacted with $KMnO_4$ and washed by the same methods given in Example 4. The sample was dried at 50°C overnight.

Elemental analysis showed the Mg, Al and Mn to be 19.1%, 9.25%, 6.66% (wt/wt) respectively. This analysis represents 35.4% of the theoretical ion exchange capacity of a hydrotalcite structure with this Mg/Al ratio. The quantity of $C_2H_4$ reacted by the material was a 3.7 ml (STP) per 1 gram. The quantity of $MnO_4^-$ leached from the sample when 1 gram was stirred with 100 ml of distilled water for 10 min was 7.5 mg/g.

The XRD analysis of this material showed a broad basal spacing of 30 Angstroms as well as basal spacing of 8.4 Angstroms indicating the presence of both permanganate and alkyl sulfate in the structure. The quantity of $C_2H_4$ reacted by the sample was 7 ml (STP) per 1 g. The quantity of $MnO_4^-$ leached from the sample when 1 g was stirred with 100 ml of distilled water for 1/2 hour was 20 mg/g. The sample was difficult to wet with water.

EXAMPLE 6

A hydrotalcite like material containing permanganate was prepared using Mg:Fe ratio of 3:1. The starting hydrotalcite was made by adding

| Magnesium nitrate hexahydrate | (153.9 g) and |
|---|---|
| Iron nitrate hydrate | (80.8 g) |
| (both in 300 ml of water) | |
| to | |
| Sodium hydroxide | (72 g) and |
| Sodium carbonate | (31.8 g) |
| (both in 100 ml of water) | |

The slurry was homogenized, charged into a 400 ml autoclave and heated and stirred at 125°C for 18 hours. The hydrotalcite-like material was isolated by the same method used in Example 1.

The hydrotalcite was then calcined at 500°C for 18 hours, contacted with permanganate and isolated by the same method used in Example 1.

Elemental analysis showed Mg, Fe and Mn to be 20.5%, 27.9%, 1.4% (wt/wt) respectively. The quantity of $C_2H_4$ reacted by the material was 3.1 ml (STP) per 1 gram.

EXAMPLE 7

A hydrotalcite like material containing permanganate was prepared using Ca:Al ratio of 3:1. The starting hydrotalcite like material was made by adding

Calcium carbonate (60g)
Aluminium turnings (5.4g)

(both dissolved in 50 ml water and 150 ml of concentrated perchloric acid)
to

Sodium hydroxide (72g)

(in 50 ml of water).
The slurry was homogenized, charged into a 400 ml autoclave and heated and stirred at 130°C for 4 days. The hydrotalcite like material was washed in distilled water (11) six times and isolated by centrifugation. The material was then calcined at 500°C for 18 hours. The solid (2g) was contacted with $KMnO_4$ (5g) in 50 ml of water for 18 hours. The solid was then washed in distilled water (250 ml) six times and then dried at 50°C.

The elemental analysis showed Ca, Al and Mn to be 26.9%, 7.57% and 6.04%. This represents 39.2% of the theoretical exchange capacity of the hydrotalcite like structure. The quantity of $C_2H_4$ reacted by the material was 7.1 ml (STP) per 1 gram.

EXAMPLE 8

Pellets were prepared from the hydrotalcite-permanganate materials by extruding the materials in a wet gel state through a 3 mm die and allowing the gel to then dry. The materials produced in Examples 1, 3, 4 and 5 were extruded into pellets by the above method. A 5th sample was produced by taking pellets produced in 1 and coating the pellets with a thin parafin film. The 6th and 7th samples are commercially available permanganate loaded pellets known as "bloom fresh" and "ethysorb" respectively. The elemental analysis of samples 6 and 7 is given in Table 2.

TABLE 2

| Elemental Analysis (% wt/wt) | | | | | |
|---|---|---|---|---|---|
| | Al | SI | Ca | Na | Mn |
| Pellet sample 6 | 38 | 0 | 0.05 | 0.4 | 1.0 |
| Pellet sample 7 | 42.3 | 0 | 0.02 | 0.2 | 1.2 |

The leaching of $MnO_4^-$ from the pellets was determined by contacting 1 gram of pellets with 100 ml of water for 10 min and determining the concentration of $MnO_4^-$ in the water by UV visible absorbance.

The results are given in Table 3.

TABLE 3

| Quantity of $MnO_4^-$ leached from pellets on contact with water | |
|---|---|
| Sample | $MnO_4^-$ leached (mg/g) |
| 1 | 24.0 |
| 2 | 23.4 |
| 3 | 5.5 |
| 4 | 7.5 |
| 5 | 0.1 |
| 6 | 9.6 |
| 7 | 14.4 |

EXAMPLE 9

Pellets of hydrotalcite containing permanganate were prepared using binders. The attrition strength of these pellets was compared to two commercially available pellets. The hydrotalcite pellets containing permanganate were prepared by the method given in Example 8 and the binders used were added to the wet gel prior to extrusion.

The material produced in Example 1 was used to produce the pellets. The binders added the wet gel were 10% sodium montmorillonite (sample 2), 25% gamma alumina (sample 3), 25% sodium montmorillinite (sample 4) and 25% silica (sample 5). Sample 1 was the extrudate produced without binder. Sample 6 is the material produced in Example 1 pressed to 3000 psi. Sample 7 is the "bloom fresh" pellets and sample 8 is the "Ethysorb" pellets. Elemental analysis is given in Table 2.

The attrition strength of the pellets was determined by weighing the powder smaller than 300 um produced with 1 g of pellets is shaken in a 4 cm dia x 10 cm sample tube for 1 hour at 10 cycles/sec with an 8 mm amplitude. The results were given in Table 4.

TABLE 4

| Powder less than 300 um | |
|---|---|
| Sample | Powder (% wt) |
| 1 | 2 |
| 2 | 3 |
| 3 | 6 |

Continuation of the Table on the next page

TABLE 4  (continued)

| Powder less than 300 um | |
|---|---|
| Sample | Powder (% wt) |
| 4 | 2 |
| 5 | 3 |
| 6 | 8 |
| 7 | 2 |
| 8 | 1 |

These results show that hydrotalcite based pellets produced by pressing are not as attrition resistant as pellets produced by extrusion of wet gels followed by drying. Further, that the use of these binders is not necessary and that the hydrotalcite based pellets are as attrition resistant as the commercially available pellets.

EXAMPLE 10

Ethylene reaction capacity of the powders and pellets was determined by sealing 0.05 g of powder or 1 g of pellets into a glass ampoule. The glass ampoule was sealed into a 130 ml flask when using powders and a 1 l flask when using pellets. The flasks were sealed with new rubber Suba seals. Pure ethylene was injected into the flasks; 0.5 ml for the powder samples and 10 ml for the pellet samples. The $C_2H_4$ concentration was accurately determined by taking 0.5 ml samples from the flasks and injecting into a gas chromatograph fitted with an alumina column and a flame ionization detector. The ampoules were then smashed by shaking the flasks. The $C_2H_4$ concentration was then determined accurately by the same method at 2 hour, 8 hour, 1 day, 2 day and 5 day intervals. The quantity of $C_2H_4$ reacted was thus determined. Blank flasks were treated in the same fashion to ensure leaks were not occurring. The ethylene uptake of various powders and pellets are given in Table 5 along with the $MnO_4$ loading of the samples.

## Table 5
### Ethylene uptake and MnO$_4$ loading

| Sample | C$_2$H$_4$ Uptake ml(STP)/g | % Mn |
|---|---|---|
| Example 1 | 6.2 | 4.8 |
| Example 2 | 7.8 | 6.3 |
| Example 3 | 6.0 | 4.9 |
| Example 4 | 7.6 | 7.0 |
| Example 5 | 3.72 | 6.7 |
| Example 6 | 3.14 | 1.4 |
| Example 7 | 7.08 | 6.1 |
| Example 8 – sample 5 | 3.32 | – |
| Example 8 – sample 6 | 0.95 | 1.0 |
| Example 8 – sample 7 | 1.8 | 1.2 |
| *Example 8 – sample 6, washed twice | 0 | 0.23 |
| *Example 8 – sample 7, washed twice | 0 | 0.14 |

* washing was carried out by contacting 10 g of solid with 100 ml of water, stirring for 1/2 hour, centrifuging the mixture then decanting the water to leave the washed solid.

These results show that the hydrotalcite containing permanganage has 3 to 9 times the capacity of the commercially available samples. This capacity is retained even after the samples have been washed (the hydrotalcites containing permanganate were washed between 2 and 6 times during production) whereas the commercial samples lost their capacity after washing.

EXAMPLE 11

The hydrotalcite containing permanganate material produced in Example 2 and the commercially available "Bloomfresh" and "ethysorb" were ground into a powder and used to reduce the ethylene concentration of the atmosphere surrounding stored pears. The powders were all less than 300 um and larger than 106 um. The elemental analyses of the commercial materials are given in Table 2. The powders (0.5 g of each) were sealed into 8 cm x 8 cm sachets with one wall of the sachet being spunbonded polyethylene (spunbonded polypropylene could also have been used) commercially available as Tyvek 10593 and the other wall being 50 um polyethylene film. Four pears were stored with one sachet in a sealed polyethylene bag. Eight replicas of each experiment were carried out. Another preferred packaging option was tested where the spunbonded polyethylene was heat sealed to the inside wall of the polyethylene bag and filled with 0.5 g of the powder thus avoiding the need for both a bag and a sachet. Table 6 gives the ethylene concentration in the bags for the various samples.

Table 6

| C$_2$H$_4$ concentration bags of stored pears (ppm) | | | | |
|---|---|---|---|---|
| Sample | Day 1 | Day 6 | Day 13 | Day 19 |
| No sachet | 5.2-17.0 | 5.3-18.1 | 7.5-22.2 | 16.4-55.8 |
| Sachet containing Bloomfresh | 1.0-2.8 | 1.8-4.3 | 4.1-18.4 | 29.1-52.1 |
| Sachet containing Ethysorb | 1.0-1.4 | 0.8-2.1 | 1.7-3.5 | 17.5-31.6 |
| Sachet containing Example 1 | 0.2-0.8 | 0.4-1.1 | 0.8-2.1 | 4.1-14.5 |
| Bag containing Example 1 | 0.2-0.7 | 0.3-1.1 | 0.6-2.7 | 3.5-16.3 |
| Temperature of storage | 0°C | 0°C | 0°C | 10°C |

**Claims**

1.  A synthetic layered-double permanganate material including a synthetic layered-double hydroxide material modified such that permanganate anion is included to a level greater than approximately 20% of the theoretical anion exchange capacity of the hydroxide material within its interstices.

2.  A permanganate material according to Claim 1, having the general formula

$$M_mN_n(OH)_{2m+2n}(MnO_4)_{n-(a+2b+3c)}A_aB_bC_c.xH_2O$$

    wherein

    M is divalent metal cation;
    N is a trivalent metal cation;
    A is a monovalent anion;
    B is a divalent anion;
    C is a trivalent anion;
    m and n are numbers such that m/n has values of approximately 1 to approximately 6;
    a, b, c and x are each numbers of from 0 to approximately 10.

3.  A permanganate material according to Claim 2, wherein M is a divalent metal cation selected from calcium, magnesium, nickel, iron and zinc, and N is a trivalent metal cation selected from aluminium, iron and chromium.

4.  A permanganate material according to Claim 2 having the general formula

$$[Mg_{1-y}Al_y(OH)_2][(OH)_a(CO_3)_b(MnO_4)_{(y-a-2b)}].xH_2O$$

    wherein

    $$0.20 \leq y \leq 0.5$$

    and

    $$0.2 \leq (y-a-2b)/y \leq 1.0$$

5.  A permanganate material according to Claim 3, selected from

    $$Mg_2Al_2(OH)_8(MnO_4)_2.4H_2O$$

    $$Mg_3Al_2(OH)_{10}(MnO_4)_2.4H_2O$$

    $$Mg_4Al_2(OH)_{12}(MnO_4)_2.4H_2O$$

    $$Mg_5Al_2(OH)_{14}(MnO_4)_2.4H_2O$$

    $$Mg_6Al_2(OH)_{16}(MnO_4)_2.4H_2O$$

    $$Mg_7Al_2(OH)_{18}(MnO_4)_2.4H_2O$$

$$Mg_8Al_2(OH)_{20}(MnO_4)_2.4H_2O$$

$$Mg_6Al_2(OH)_{16}[(CO_3)_{0.2}(MnO_4)_{1.6}].4H_2O$$

$$Mg_6Al_2(OH)_{16}[(CO_3)_{0.8}(MnO_4)_{0.4}].4H_2O$$

$$Mg_6Al_2(OH)_{16}[(OH)_{1.7}(MnO_4)_{0.3}].4H_2O$$

$$Mg_6Al_2(OH)_{16}[(OH)_{0.3}(MnO_4)_{1.7}].4H_2O$$

$$Mg_6Al_2(OH)_{16}[(CO_3)_{0.3}(OH)_{0.5}(MnO_4)_{0.9}].4H_2O$$

$$Mg_6Fe_2(OH)_{16}(MnO_4)_2.4H_2O$$

$$Mg_6Cr_2(OH)_{16}(MnO_4)_2.4H_2O$$

$$Ni_6Al_2(OH)_{16}(MnO_4)_2.4H_2O$$

$$Ca_6Al_2(OH)_{16}(MnO_4)_2.4H_2O$$

$$Zn_6Al_2(OH)_{16}(MnO_4)_2.4H_2O$$

$$Zn_6Al_2(OH)_{16}(MnO_4)_2.4H_2O$$

$$LiAl_2(OH)_6(MnO_4).5H_2O$$

6. A permanganate material according to Claim 1, further modified to include a hydrophobic anion within its interstices.

7. A permanganate material according to Claim 6, wherein the hydrophobic anion is derived from a long chain alkyl acid selected from long chain alkyl carboxylic acids, sulphonic acids, phosphoric or phosphonic acids.

8. An ethylene sorbing pellet composition including an effective amount of

   a synthetic layered-double permanganate material as defined in any of claims 1 to 7; and
   a pelleting support.

9. A pellet composition according to claim 8 including

   approximately 70 to 95% by weight based on the total weight of the pellet composition of a synthetic layered-double permanangate material as defined in claim 3;
   and approximately 5 to 30% by weight based on the total weight of the pelleting composition of a pelleting support selected from alumina, silica and paraffins.

10. A pellet composition according to Claim 9, wherein the permanganate material is as defined in claim 5.

11. A method of preparing a synthetic layered-double permanganate material as defined in any of claims 1 to 7, which method includes

   providing

      a synthetic layered-double hydroxide material; and
      a source of permanganate anions; and

   mixing the synthetic layered-double hydroxide material and permanganate anions for a time sufficient to allow reaction therebetween.

12. A method according to Claim 11, wherein the synthetic layered-double hydroxide material is a compound having

the general formula

$$M_m N_n (OH)_{2m+2n} A_a \cdot bH_2O$$

wherein

M is a divalent metal cation;
N is a trivalent metal cation;
A is an hydroxyl ion or a mono-, di- or trivalent anion which decomposes to form hydroxyl ions;
m and n are integers such that m/n has values of approximately 1 to approximately 6;
a is an integer with the provisos that when A is a monovalent anion a = n, when A is a divalent anion a = 1/2n, and when A is a trivalent anion a = 1/3m; and
b is an integer having values of 0 to 10.

13. A method according to Claim 12, wherein the synthetic layered-double hydroxide material is mixed with an aqueous solution of permanganate ions for a period of approximately 1 hour to 3 days.

14. A method according to Claim 13, which method further includes the preliminary step of heating the hydrotalcite-like material for a time sufficient and at a temperature sufficient to reduce or eliminate water of hydration and decompose any interlayer anions, such as carbonate ions.

15. A method according to Claim 14, wherein the material is heated to a temperature of approximately 300 to 550°C.

16. A method according to Claim 12, further including the subsequent steps of isolating the reaction product and drying the reaction product.

17. A method for the extension of storage life produce, which method includes

providing

produce in a suitable storage container; and
a synthetic layered-double permanganate material as defined in any of claims 1 to 7; and

placing the permanganate material within, or in communication with, the suitable storage container.

18. A method according to Claim 17 wherein the permanganate material is as defined in claim 4.

19. A method according to Claim 18, wherein the permanganate material is as defined in claim 5.

20. A method according to Claim 19 wherein the permanganate material is provided in the form of pellets.

**Patentansprüche**

1. Synthetisches Permanganat-Material mit Doppelschicht-Aufbau, umfassend ein synthetisches Hydroxid-Material mit Doppelschicht-Aufbau, das so modifiziert ist, daß Permanganat-Anion bis auf eine Konzentration von größer als etwa 20% der theoretischen Anionenaustausch-Kapazität des Hydroxid-Materials innerhalb seiner Zwischenräume eingeschlossen ist.

2. Permanganat-Material nach Anspruch 1 mit der allgemeinen Formel

$$M_m N_n (OH)_{2m+2n} (MnO_4)_{n-(a+2b+3c)} A_a B_b C_c \cdot xH_2O$$

worin

M ein zweiwertiges Metallkation ist;
N ein dreiwertiges Metallkation ist;
A ein einwertiges Anion ist;
B ein zweiwertiges Anion ist;
C ein dreiwertiges Anion ist;

m und n solche Zahlen sind, daß m/n Werte von etwa 1 bis etwa 6 annimmt;
a, b, c und x jeweils Zahlen von 0 bis etwa 10 sind.

3. Permanganat-Material nach Anspruch 2, in welchem M ein aus Calcium, Magnesium, Nickel, Eisen und Zink ausgewähltes zweiwertiges Metallkation ist und N ein aus Aluminium, Eisen und Chrom ausgewähltes dreiwertiges Metallkation ist.

4. Permanganat-Material nach Anspruch 2 mit der allgemeinen Formel

$$[Mg_{1-y}Al_y(OH)_2] [(OH)_a(CO_3)_b(MnO_4)_{(y-a-2b)}].xH_2O$$

worin $0{,}20 \leq y \leq 0{,}5$
und $0{,}2 \leq (y-a-2b)/y \leq 1{,}0$.

5. Permanganat-Material nach Anspruch 3, ausgewählt aus

$$Mg_2Al_2(OH)_8(MnO_4)_2.4H_2O$$

$$Mg_3Al_2(OH)_{10}(MnO_4)_2.4H_2O$$

$$Mg_4Al_2(OH)_{12}(MnO_4)_2.4H_2O$$

$$Mg_5Al_2(OH)_{14}(MnO_4)_2.4H_2O$$

$$Mg_6Al_2(OH)_{16}(MnO_4)_2.4H_2O$$

$$Mg_7Al_2(OH)_{18}(MnO_4)_2.4H_2O$$

$$Mg_8Al_2(OH)_{20}(MnO_4)_2.4H_2O$$

$$Mg_6Al_2(OH)_{16}[(CO_3)_{0,2}(MnO_4)_{1,6}].4H_2O$$

$$Mg_6Al_2(OH)_{16}[(CO_3)_{0,8}(MnO_4)_{0,4}].4H_2O$$

$$Mg_6Al_2(OH)_{16}[(OH)_{1,7}(MnO_4)_{0,3}].4H_2O$$

$$Mg_6Al_2(OH)_{16}[(OH)_{0,3}(MnO_4)_{1,7}].4H_2O$$

$$Mg_6Al_2(OH)_{16}[(CO_3)_{0,3}(OH)_{0,5}(MnO_4)_{0,9}].4H_2O$$

$$Mg_6Fe_2(OH)_{16}(MnO_4)_2.4H_2O$$

$$Mg_6Cr_2(OH)_{16}(MnO_4)_2.4H_2O$$

$$Ni_6Al_2(OH)_{16}(MnO_4)_2.4H_2O$$

$$Ca_6Al_2(OH)_{16}(MnO_4)_2.4H_2O$$

$$Zn_6Al_2(OH)_{16}(MnO_4)_2.4H_2O$$

$$Zn_6Al_2(OH)_{16}(MnO_4)_2.4H_2O$$

$$LiAl_2(OH)_6(MnO_4).5H_2O$$

6. Permanganat-Material nach Anspruch 1, weiter so modifiziert, daß es ein hydrophobes Anion innerhalb seiner Zwischenräume einschließt.

7. Permanganat-Material nach Anspruch 6, in welchem das hydrophobe Anion von einer aus langkettigen Alkyl-Carbonsäuren, -Sulfonsäuren, -Phosphor- oder -Phosphonsäuren ausgewählten langkettigen Alkyl-Säure abgeleitet ist.

8. Ethylen-Sorptions-Pellet-Zusammensetzung, umfassend eine effektive Menge

eines synthetischen Permanganat-Materials mit Doppelschicht-Aufbau wie in irgendeinem der Ansprüche 1 bis 7 definiert; und
eines Pelletier-Trägers.

9. Pellet-Zusammensetzung nach Anspruch 8, umfassend

etwa 70 bis 95 Gewichts-%, bezogen auf das Gesamtgewicht der Pellet-Zusammensetzung, eines synthetischen Permanganat-Materials mit Doppelschicht-Aufbau wie in Anspruch 3 definiert; und
etwa 5 bis 30 Gewichts-%, bezogen auf das Gesamtgewicht der Pelletier-Zusammensetzung, eines Pelletier-Trägers, der aus Aluminiumoxid, Siliciumdioxid und Paraffinen ausgewählt ist.

10. Pellet-Zusammensetzung nach Anspruch 9, in welcher das Permanganat-Material wie in Anspruch 5 definiert ist.

11. Verfahren zur Herstellung eines synthetischen Permanganat-Materials mit Doppelschicht-Aufbau wie in irgendeinem der Ansprüche 1 bis 7 definiert, umfassend

die Bereitstellung
eines synthetischen Hydroxid-Materials mit Doppelschicht-Aufbau; und
einer Quelle für Permanganat-Anionen; und
das Mischen des synthetischen Hydroxid-Materials mit Doppelschicht-Aufbau und der Permanganat-Anionen für eine Zeitdauer, die ausreicht, um die Umsetzung zwischen den beiden zu ermöglichen.

12. Verfahren nach Anspruch 11, in welchem das synthetische Hydroxid-Material mit Doppelschicht-Aufbau eine Verbindung mit der allgemeinen Formel

$$M_m N_n (OH)_{2m+2n} A_a \cdot bH_2O$$

ist, worin

M ein zweiwertiges Metallkation ist;
N ein dreiwertiges Metallkation ist;
A ein Hydroxylion oder ein ein-, zwei- oder dreiwertiges Anion ist, das sich unter Bildung von Hydroxylionen zersetzt;
m und n solche ganze Zahlen sind, daß m/n Werte von etwa 1 bis etwa 6 annimmt;
a eine ganze Zahl ist, mit der Maßgabe, daß wenn A ein einwertiges Anion ist, a = n, wenn A ein zweiwertiges Anion ist, a = 1/2n, und wenn A ein dreiwertiges Anion ist, a = 1/3n; und
b eine ganze Zahl mit Werten von 0 bis 10 ist.

13. Verfahren nach Anspruch 12, in welchem das synthetische Hydroxid-Material mit Doppelschicht-Aufbau mit einer wäßrigen Lösung von Permanganationen für eine Zeitspanne von etwa 1 Stunde bis 3 Tagen gemischt wird.

14. Verfahren nach Anspruch 13, weiter umfassend die vorgeschaltete Stufe der Erwärmung des Hydrotalcitähnlichen Materials für eine ausreichende Zeitspanne und bei einer ausreichenden Temperatur, um Hydratwasser zu vermindern oder zu entfernen und jegliche Anionen zwischen den Schichten, wie beispielsweise Carbonationen, zu zersetzen.

15. Verfahren nach Anspruch 14, in welchem das Material auf eine Temperatur von etwa 300 bis 550°C erwärmt wird.

16. Verfahren nach Anspruch 12, weiter umfassend die anschließenden Stufen der Isolierung des Reaktionsproduktes und der Trocknung des Reaktionsproduktes.

17. Verfahren zur Verlängerung der Lager-Lebensdauer von Erzeugnissen, umfassend

die Bereitstellung

eines Erzeugnisses in einem geeigneten Lager-Behälter; und

eines synthetischen Permanganat-Materials mit Doppelschicht-Aufbau wie in irgendeinem der Ansprüche 1 bis 7 definiert; und

das Einbringen des Permanganat-Materials in den geeigneten Lager-Behälter oder das In-Verbindung-Bringen damit.

**18.** Verfahren nach Anspruch 17, in welchem das Permanganat-Material wie in Anspruch 4 definiert ist.

**19.** Verfahren nach Anspruch 18, in welchem das Permanganat-Material wie in Anspruch 5 definiert ist.

**20.** Verfahren nach Anspruch 19, in welchem das Permanganat-Material in Form von Pellets bereitgestellt wird.

## Revendications

**1.** Matière à base de permanganate à couche double, synthétique, comprenant une matière à base d'hydroxyde à couche double, synthétique, modifiée en une manière telle que l'anion permanganate soit inclus en une proportion supérieure à approximativement 20% de la capacité d'échange d'anions théorique de la matière à base d'hydroxyde dans ses interstices.

**2.** Matière à base de permanganate suivant la revendication 1, répondant à la formule générale suivante :

$$M_mN_n(OH)_{2m+2n}(NmO_4)_{n-(a+2b+3c)}A_aB_bC_2O.xH_2O$$

dans laquelle

M est un cation de métal bivalent,
N est un cation de métal trivalent,
A est un anion monovalent,
B est un anion bivalent,
C est un anion trivalent,
m et n sont des nombres tels que m/n possède des valeurs qui varient d'approximativement 1 à approximativement 6,
a, b, c et x sont chacun des nombres qui varient de 0 à approximativement 10.

**3.** Matière à base de permanganate suivant la revendication 2, caractérisée en ce que M est un cation de métal bivalent choisi parmi le calcium, le magnésium, le nickel, le fer et le zinc et N est un cation de métal trivalent, choisi parmi l'aluminium, le fer et le chrome.

**4.** Matière à base de permanganate suivant la revendication 2, caractérisée en ce qu'elle répond à la formule générale

$$[Mg_{1-y}Al_y(OH)_2][(OH)_a(CO_3)_b(MnO_4)_{(y-a-2b)}].xH_2O$$

dans laquelle

$$0,20 \leq y \leq 0,5$$

et

$$02 \leq (y-a-2b)/y \leq 1,0$$

**5.** Matière à base de permanganate suivant la revendication 3, caractérisée en ce qu'elle est choisie parmi celles qui suivent :

$$Mg_2Al_2(OH)_8(MnO_4)_2.4H_2O$$

$$Mg_3Al_2(OH)_{10}(MnO_4)_2.4H_2O$$

$$Mg_4Al_2(OH)_{12}(MnO_4)_2.4H_2O$$

$$Mg_5Al_2(OH)_{14}(MnO_4)_2.4H_2O$$

$$Mg_6Al_2(OH)_{16}(MnO_4)_2.4H_2O$$

$$Mg_7Al_2(OH)_{18}(MnO_4)_2 \cdot 4H_2O$$

$$Mg_8Al_2(OH)_{20}(MnO_4)_2 \cdot 4H_2O$$

$$Mg_6Al_2(OH)_{16}[(CO_3)_{0,2}(MnO_4)_{1,6}] \cdot 4H_2O$$

$$Mg_6Al_2(OH)_{16}[(CO_3)_{0,8}(MnO_4)_{0,4}] \cdot 4H_2O$$

$$Mg_6Al_2(OH)_{16}[(OH)_{1,7}(MnO_4)_{0,3}] \cdot 4H_2O$$

$$Mg_6Al_2(OH)_{16}[(OH)_{0,3}(MnO_4)_{1,7}] \cdot 4H_2O$$

$$Mg_6Al_2(OH)_{16}[(CO_3)_{0,3}((OH)_{0,5}(MnO_4)_{0,9}] \cdot 4H_2O$$

$$Mg_6Fe_2(OH)_{16}(MnO_4)_2 \cdot 4H_2O$$

$$Mg_6Cr_2(OH)_{16}(MnO_4)_2 \cdot 4H_2O$$

$$Ni_6Al_2(OH)_{16}(MnO_4)_2 \cdot 4H_2O$$

$$Ca_6Al_2(OH)_{16}(MnO_4)_2 \cdot 4H_2O$$

$$Zn_6Al_2(OH)_{16}(MnO_4)_2 \cdot 4H_2O$$

$$Zn_6Al_2(OH)_{16}(MnO_4)_2 \cdot 4H_2O$$

$$Li_6Al_2(OH)_6(MnO_4) \cdot 5H_2O$$

6. Matière à base de permanganate suivant la revendication 1, caractérisée en ce qu'elle est encore davantage modifiée de manière à inclure un anion hydrophobe dans ses interstices.

7. Matière à base de permanganate suivant la revendication 6, caractérisée en ce que l'anion hydrophobe provient d'un acide alkylique à longue chaîne, choisi parmi les acides phosphoniques, phosphoriques, sulfoniques, ou carboxyliques, alkyliques à longues chaînes.

8. Composition en granules sorbant l'éthylène, y compris une proportion efficace de

   une matière à base de permanganate à double couche, synthétique, telle que définie dans l'une quelconque des revendications 1 à 7 et
   un support de granulation.

9. Composition en granules suivant la revendication 8, caractérisée en ce qu'elle comprend

   approximativement 70 à 95% en poids, sur base du poids total de la composition en granules, d'une matière à base de permanganate à double couche, synthétique, telle que définie dans la revendication 3
   approximativement 5 à 30% en poids, sur base du poids total de la composition en granules, d'un support de granulation choisi parmi l'alumine, la silice et les paraffines.

10. Composition en granules suivant la revendication 9, caractérisée en ce que la matière à base de permanganate est telle que définie dans la revendication 5.

11. Procédé de préparation d'une matière à base de permanganate à double couche, synthétique, caractérisé en ce que

    on prend

       une matière à base d'hydroxyde à double couche, synthétique et
       une source d'anions permanganate et

on mélange la matière à base d'hydroxyde à double couche, synthétique et des anions permanganate pendant une période qui suffit à permettre le déroulement d'une réaction entre eux.

12. Procédé suivant la revendication 11, caractérisé en ce que la matière à base d'hydroxyde à double couche, synthétique, est un composé qui répond à la formule générale suivante :

$$M_m N_n (OH)_{2m+2n} A_4 . bH_2O$$

dans laquelle

M représente un cation de métal bivalent,
N représente un cation de métal trivalent,
A représente un ion hydroxyle, ou un anion monovalent, bivalent, ou trivalent, qui se décompose pour engendrer des ions hydroxyle,
m et n sont des nombres entiers tels que m/n possède des valeurs qui varient d'approximativement 1 à approximativement 6,
a est un nombre entier avec les conditions que lorsque A est un anion monovalent, $a = n$, lorsque A est un anion bivalent, $a = 1/2n$ et lorsque A est un anion trivalent, $a = 1/3m$ et
b est un nombre entier dont les valeurs varient de 0 à 10.

13. Procédé suivant la revendication 12, caractérisé en ce que l'on mélange la matière à base d'hydroxyde à double couche, synthétique, à une solution aqueuse d'ions permanganate, pendant une période qui varie d'approximativement 1 heure à 3 jours.

14. Procédé suivant la revendication 13, caractérisé en ce qu'il comprend l'étape préliminaire consistant à chauffer la matière analogue à de l'hydrotalcite pendant une durée et à une température qui suffisent à réduire ou à éliminer l'eau d'hydratation et à décomposer tous anions intercouche, comme des ions carbonate.

15. Procédé suivant la revendication 14, caractérisé en ce que l'on chauffe la matière à une température d'approximativement 300 à 550°C.

16. Procédé suivant la revendication 12, caractérisé en ce qu'il comprend en outre les étapes ultérieures d'isolement du produit de la réaction et de séchage du produit de la réaction.

17. Procédé d'extension de la vie en conservation d'un produit, caractérisé en ce que

on prévoit le produit dans un récipient de conservation approprié et
une matière à base de permanganate à double couche, synthétique, telle que définie dans l'une quelconque des revendications 1 à 7 et
on place la matière à base de permanganate dans, ou en contact avec, le récipient de conservation approprié.

18. Procédé suivant la revendication 17, caractérisé en ce que la matière à base de permanganate est telle que définie dans la revendication 4.

19. Procédé suivant la revendication 18, caractérisé en ce que la matière à base de permanganate est telle que définie dans la revendication 5.

20. Procédé suivant la revendication 19, caractérisé en ce que la matière à base de permanganate est prévue sous la forme de granules.

SAMPLE          0   S-776C
(Max. Intensity =   3000      File = SJG6726 )          FIGURE 1A

SAMPLE          3   S-776D
(Max. Intensity =   3000      File = SJG6719 )          FIGURE 1B

SAMPLE          11  s-778g
(Max. Intensity =  1500     File = DGH6811 )          FIGURE 1C

FIGURE 2

Schematic diagram of
apparatus used to
measure the ethylene
sorption.